# DEMANDE DE BREVET EUROPEEN

(11) **EP 1 839 972 A1**
(43) Date de publication de la demande: **03.10.2007**
(21) Numéro de dépôt: 07300876.5
(22) Date de dépôt: 19.03.2007
(51) Int. Cl.: B60S 1/28

(54) **Essuie-glace pour surface vitrée d'un véhicule automobile**

(30) Priorité: 30.03.2006 FR 0651103
(71) Demandeur: PEUGEOT CITROËN AUTOMOBILES S.A., 78140 Velizy Villacoublay (FR)
(72) Inventeur: Jeuffe, Gérard, 78580 Bazemont (FR)

(57) **Abrégé**

Essuie glace pour surface vitrée d'un véhicule automobile présentant de préférence un profil panoramique, notamment pour le pare brise avant ou la lunette arrière de l'habitacle de ce véhicule, comportant au moins un bras entraîné avec un mouvement alternatif autour d'un axe supporté par l'habitacle, ce bras portant un balai constitué d'un support pour une raclette principale, appliquée sur la surface vitrée, caractérisé en ce que le support (10) de la raclette principale (6) du balai (4) comporte une glissière longitudinale (22) pour un patin coulissant (8), apte à se déplacer librement dans cette glissière selon la position du balai (4) devant la surface vitrée (3), ce patin étant réuni à l'extrémité d'une lèvre souple allongée (7), en appui également contre la surface vitrée et dont l'autre extrémité comporte un axe de rotation fixé à l'habitacle.

## Description

La présente invention est relative à un essuie glace pour surface vitrée de véhicule automobile, présentant de préférence un profil panoramique, utilisant au moins un balai supporté par un bras d'entraînement commandé selon un mouvement de rotation alterné en va et vient autour d'un axe fixe porté par la carrosserie du véhicule en bordure de la surface vitrée, ce balai comportant de façon usuelle une raclette souple se déplaçant au contact de cette surface qui définit le pare brise ou la lunette arrière de ce véhicule.

On sait que, pour le nettoyage du pare brise ou plus généralement d'une surface vitrée plane ou bombée, délimitée par des côtés frontaux et latéraux un contour à profil sensiblement rectangulaire, l'usage d'un ou même de deux balais d'essuie glace rotatifs à débattements alternatifs mutuellement imbriqués, ne permet pas de balayer totalement la surface, laissant hors d'atteinte de la course de ces balais des zones de surfaces plus ou moins grandes non balayées, ce qui peut constituer une gêne notable pour le conducteur du véhicule, notamment dans sa vision latérale vers les bords latéraux du pare brise ou de la lunette arrière.

La présente invention a pour objet un essuie glace perfectionné qui met à profit le mode d'entraînement usuel d'au moins un balai classique, déplaçant sa raclette au contact de la surface vitrée selon un mouvement de va et vient alterné autour d'un axe fixe, pour entraîner également un moyen de balayage additionnel qui décrit simultanément une zone complémentaire de cette surface, non parcourue par le balai.

A cet effet, l'essuie glace perfectionné considéré, comportant au moins un bras entraîné avec un mouvement alternatif autour d'un axe supporté par l'habitacle, ce bras portant un balai constitué d'un support pour une raclette principale, appliquée sur la surface vitrée, se caractérise en ce que le support de la raclette principale du balai comporte une glissière longitudinale pour un patin coulissant, apte à se déplacer librement dans cette glissière selon la position du balai devant la surface vitrée, ce patin étant réuni à l'extrémité d'une lèvre souple allongée, en appui également contre la surface vitrée et dont l'autre extrémité comporte un axe de rotation fixé à l'habitacle sur un des côtés latéraux de celui-ci.

Grâce à ses dispositions, quand le bras tourne en rotation alternée, en entraînant la raclette principale qui balaye la surface vitrée, le patin coulisse dans sa glissière avec également un mouvement de va et vient alternatif, entraînant au contact de cette surface la lèvre souple qui assure le balayage simultané de la zone complémentaire correspondante de cette surface.

Selon une autre caractéristique, l'axe de rotation de la lèvre souple comporte un pion circulaire, solidaire de l'extrémité de la lèvre, engagé sur un goujon porté par l'habitacle.

Dans un mode de réalisation préféré, le support de la raclette principale comporte une rainure longitudinale ouverte, recevant une nervure portée par le patin coulissant, lequel supporte la lèvre souple par l'intermédiaire d'une membrure de raidissement, solidaire de la lèvre.

D'autres caractéristiques d'un essuie glace conforme à l'invention, apparaîtront encore à travers la description qui suit d'un exemple de réalisation, donné à titre indicatif et non limitatif, en référence aux dessins annexés sur lesquels:
- La Figure 1 est une vue en perspective d'un pare brise panoramique pour véhicule automobile équipé d'un essuie glace conforme à l'invention.
- La Figure 2 est une vue de détail à plus grande échelle de la lèvre souple associée à la raclette principale.
- La Figure 3 est une vue en coupe transversale illustrant la section et le montage relatif de la raclette principale et de la lèvre souple.
- La Figure 4 est une vue également en coupe du pion d'ancrage prévu à l'extrémité de la lèvre souple.

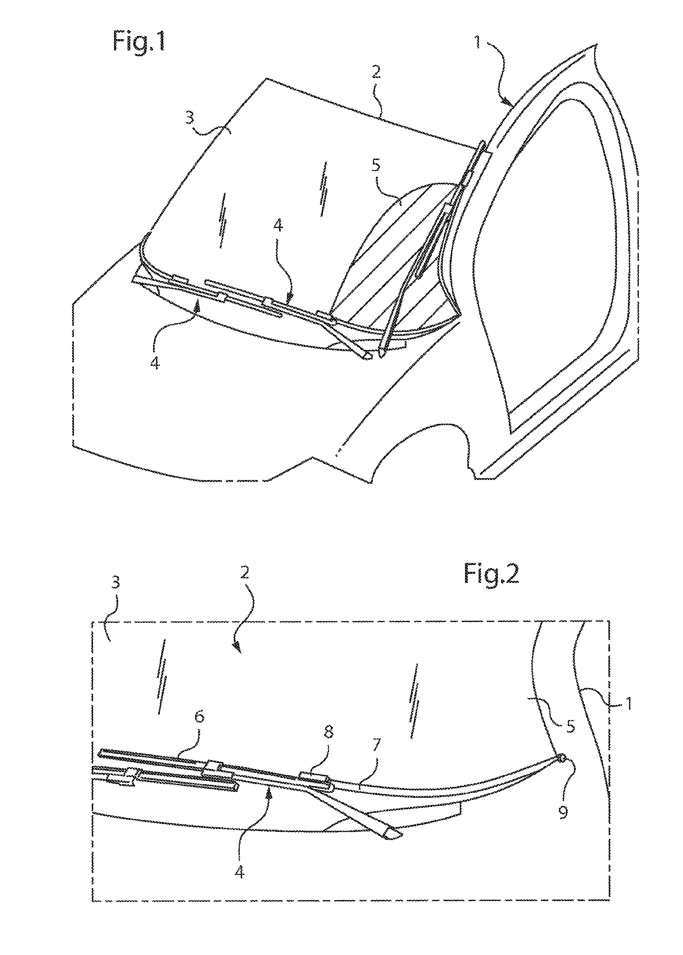

Sur la Figure 1, la référence 1 désigne une partie de l'habitacle d'un véhicule automobile qui comporte un pare brise avant 2 dont la surface vitrée 3 est prévue, comme il est parfaitement classique, pour être parcourue par un jeu de balais d'essuie glace 4, ici au nombre de deux, chacun de ces balais étant porté par un bras de support et étant entraîné avec un mouvement de rotation en va et vient continu, les débattements des bras et par suite des balais qu'ils supportent s'imbriquant mutuellement afin de décrire la plus large portion possible de la surface vitrée 3.

Il s'avère toutefois que, à côté de la zone de la surface vitrée parcourue par chacun des balais 4, subsiste une région 5, représentée schématiquement en traits hachurés sur la Figure 1 pour l'un de ces balais 4, qui n'est que partiellement décrite par celui-ci, de sorte que peut subsister dans cette région une fraction importante de l'eau de pluie reçue par le pare brise, également des salissures diverses qui ne peuvent pas être éliminées par le balai dans son mouvement propre de va et vient, commandé par un moteur réversible qui provoque l'entraînement en rotation alternative d'un axe porté par l'habitacle et dont le balai est solidaire.

L'invention permet de pallier cet inconvénient en associant à la raclette 6, dite principale, de chaque balai 4 qui s'applique contre la surface vitrée 3 du pare brise 2, cette raclette schématiquement représentée sur la Figure 2 comportant une lèvre souple complémentaire 7, qui, entraînée de la manière décrite ci-après par la raclette principale, assure le balayage efficace de la zone 5, en permettant un nettoyage d'une plus grande partie de la surface vitrée 3 et en procurant aux usagers du véhicule une meilleure visibilité à travers l'ensemble du pare brise.

Selon l'invention, la lèvre 7 est réalisée au moyen d'un élément souple allongé, en caoutchouc ou matériau classique similaire, dont une extrémité est reliée à un patin de guidage 8 porté par le balai 4, et dont l'autre extrémité, voisine du côté correspondant de l'habitacle 1, est réunie à un axe de rotation fixe 9, cette lèvre 7 de longueur constante présentant, grâce au coulissement du patin 8 par rapport à la raclette principale 6 lors des débattements alternatifs du balai 4, la faculté d'accommoder les variations de la distance qui sépare l'axe 9 vis-à-vis du balai au cours des mouvements alternatifs de celui-ci.

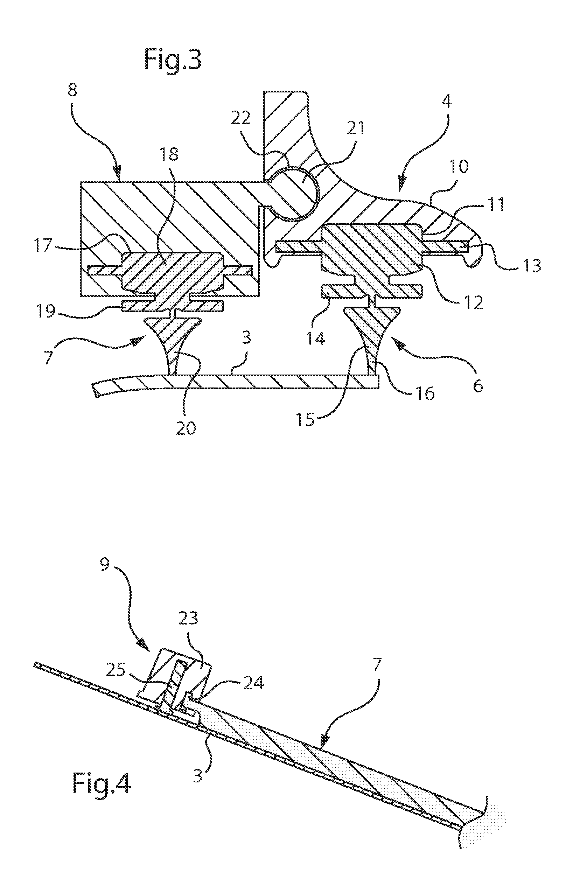

Comme on le voit plus en détail sur la Figure 3, le balai d'essuie glace comporte un support 10 muni d'une rainure 11 dans laquelle est montée un talon 12 faisant partie de la raclette principale 6, ce talon comportant des ailettes latérales 13 permettant de l'immobiliser dans le support 10.

Le talon 12 se prolonge par une membrure 14 de raidissement, solidaire d'une partie terminale 15 qui s'amincit progressivement et dont l'extrémité 16 est en contact avec la surface vitrée 3 qu'elle nettoie avec le mouvement du balai 4.

Le patin 8 qui est solidaire de la lèvre souple 7, comporte de manière similaire à ce qui est prévu pour la raclette principale 6, une rainure longitudinale ouverte 17 dans laquelle est immobilisé un talon 18, lequel présente une membrure de raidissement 19 prolongée par une partie terminale 20 qui porte également contre la surface vitrée 3.

La liaison entre le patin 8 ainsi solidarisé de la lèvre souple 7 et le support 10 du balai 4 portant la raclette principale 6, est assurée par une nervure 21 en extension latérale vis-à-vis du patin, cette nervure étant montée à coulissement dans une glissière en creux 22, ouverte dans le côté du support 10 de la raclette.

La Figure 4 illustre le détail de la réalisation de l'axe 9 relié à l'extrémité de la lèvre souple 7 opposée à celle qui est liée au patin 8 coulissant dans la glissière 22 du support 10 de la raclette principale 6.

Sur cette figure, ont voit notamment que la lèvre souple 7 est rendue solidaire d'un pion circulaire 23 par un ergot d'ancrage 24, ce pion étant engagé sur un goujon 25 porté par l'habitacle du véhicule et autour duquel le pion 23 peut ainsi librement pivoter en accompagnant le mouvement imposé à cette lèvre par l'entraînement du patin coulissant 8 avec la raclette principale 6 du balai 4.

On réalise ainsi un dispositif d'essuie glace qui utilise l'énergie du balai entraînant la raclette principale pour nettoyer une zone du pare brise qui n'est pas directement accessible à cette dernière, la lèvre souple assurant simultanément le balayage d'une zone latérale complémentaire sans qu'il soit nécessaire de mettre en oeuvre aucun moyen d'entraînement additionnel.

Bien entendu, il va de soi que l'invention ne se limite pas à l'exemple de réalisation plus spécialement décrit et représenté en référence aux dessins annexés ; elle en embrasse au contraire toutes les variantes.

## Revendications

1. - Essuie glace pour surface vitrée d'un véhicule automobile présentant de préférence un profil panoramique, notamment pour le pare brise avant ou la lunette arrière de l'habitacle de ce véhicule, comportant au moins un bras entraîné avec un mouvement alternatif autour d'un axe supporté par l'habitacle, ce bras portant un balai constitué d'un support pour une raclette principale, appliquée sur la surface vitrée, **caractérisé en ce que** le support (10) de la raclette principale (6) du balai (4) comporte une glissière longitudinale (22) pour un patin coulissant (8), apte à se déplacer librement dans cette glissière selon la position du balai (4) devant la surface vitrée (3), ce patin étant réuni à l'extrémité d'une lèvre souple allongée (7), en appui également contre la surface vitrée et dont l'autre extrémité comporte un axe de rotation (9) fixé à l'habitacle (1) sur un des côtés latéraux de celui-ci.

2. - Essuie glace selon la revendication 1, **caractérisé en ce que** l'axe de rotation (9) de la lèvre souple (7) comporte un pion circulaire (23), solidaire de l'extrémité de la lèvre, engagé sur un goujon (25) porté par l'habitacle (1).

3. - Essuie glace selon l'une des revendications 1 ou 2, **caractérisé en ce que** le support (10) de la raclette principale (6) comporte une rainure longitudinale ouverte (22), recevant une nervure (21) portée par le patin coulissant (8), lequel supporte la lèvre souple (7) par l'intermédiaire d'une membrure de raidissement (19), solidaire de la lèvre.
